# EUROPÄISCHE PATENTSCHRIFT

(11) **EP 4 296 039 B1**
(45) Veröffentlichungstag und Bekanntmachung des Hinweises auf die Patenterteilung: **27.08.2025**
(21) Anmeldenummer: 23164657.1
(22) Anmeldetag: 28.03.2023
(51) Int. Cl.: B29C 49/46, B29C 49/42, B29C 49/06, B29C 49/12, B29C 49/36, B29K 67/00, B29L 31/00, B29C 49/78

(54) **STERILE BLASFORMMASCHINE MIT SCHLEUSE UND VERFAHREN ZU DEREN BETRIEB**
STERILE BLOW MOULDING MACHINE WITH SHEATH AND METHOD FOR ITS OPERATION
MACHINE STÉRILE DE MOULAGE PAR SOUFFLAGE AVEC SAS ET SON PROCÉDÉ DE FONCTIONNEMENT

(30) Priorität: 12.07.2022 DE 102022117359
(43) Veröffentlichungstag der Anmeldung: 27.12.2023
(73) Patentinhaber: Krones AG, 93073 Neutraubling (DE)
(72) Erfinder: Soellner, Jürgen, 93073 Neutraubling (DE); Kindl, Norbert, 93073 Neutraubling (DE); Geltinger, Florian, 93073 Neutraubling (DE); Suppes, Waldemar, 93073 Neutraubling (DE); Wittmann, Christian, 93073 Neutraubling (DE); Theen, Daniel, 93073 Neutraubling (DE); Gerngross, Florian, 93073 Neutraubling (DE)
(74) Vertreter: Hannke Bittner & Partner mbB Regensburg

(56) Entgegenhaltungen:
- DE-A1- 102015 122 025
- DE-A1- 102015 122 310
- DE-A1- 102017 120 106
- DE-A1- 102017 124 331
- DE-U1- 202019 102 193

## Beschreibung

Die vorliegende Erfindung bezieht sich auf eine Vorrichtung und ein Verfahren zum Umformen von Kunststoffvorformlingen zu Kunststoffbehältnissen. Aus dem Stand der Technik sind derartige Vorrichtungen und Verfahren seit langem bekannt. Üblicherweise werden dabei erwärmte Kunststoffvorformlinge durch ein Gas, insbesondere Druckluft, expandiert.

Gattungsgemäße Vorrichtungen und Verfahren sind in den Patentschriften DE102017120106A1, DE102015122310A1, DE102017124331A1, DE102015122025A1 und DE202019102193U1 beschrieben.

In jüngerer Zeit ist man bestrebt die Herstellung derartiger Behältnisse auch steril zu ermöglichen. Dies ist vorteilhaft für die Abfüllung bestimmter Getränke. Im Stand der Technik wurden ursprünglich zunächst die Behältnisse gefertigt, beispielsweise streckgeblasen und anschließend sterilisiert. In jüngerer Zeit sind auch Anlagen bekannt geworden, bei denen bereits die Vorformlinge sterilisiert und anschließend in einem Reinraum umgeformt, beispielsweise streckgeblasen werden.

Zu Problemen kann es kommen, wenn beispielsweise Behältnisse beschädigt sind oder während des Blasprozesses beschädigt werden. Derartige beschädigte Behältnisse können nach der Herstellung bzw. dem Herstellungsversuch Probleme in der Anlage verursachen. Aus diesem Grund ist es an sich bekannt, Behältnisse aus dem Transportpfad der Behältnisse auszuschleusen.

m Falle eines sterilen Blasformprozesses ist jedoch eine derartige Ausschleusung mit Problemen verbunden, da Sorge dafür getragen werden muss, dass die Sterilität des Blasformprozesses nicht gestört oder unterbrochen wird.

Der vorliegenden Erfindung liegt daher die Aufgabe zugrunde, die Betriebsabläufe derartiger steriler Blasformmaschinen zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die umzuformenden Kunststoffvorformlinge entlang eines vorgegebenen Transportpfads transportiert. Dabei weist die Transporteinrichtung einen drehbaren Transportträger auf, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen und insbesondere gasförmigen Medium zu den Kunststoffbehältnissen umformbar sind und die Umformungsstationen jeweils Beaufschlagungseinrichtungen aufweisen, um die Kunststoffvorformlinge mit dem fließfähigen und insbesondere gasförmigen Medium zu beaufschlagen.

Weiterhin weist die Vorrichtung einen Reinraum auf, innerhalb dessen die Kunststoffvorformlinge zu den Kunststoffbehältnissen expandiert werden und/oder expandierbar sind. Erfindungsgemäß weist die Vorrichtung eine Ausschleuseeinrichtung auf, um Kunststoffvorformlinge oder Kunststoffbehältnisse aus dem Transportpfad auszuschleusen, wobei diese Ausschleuseeinrichtung wenigstens teilweise und besonders bevorzugt vollständig in den Reinraum integriert ist und/oder die Ausschleuseeinrichtung in wenigstens eine den Reinraum begrenzende Wandung integriert ist.

Unter integriert wird dabei verstanden, dass insbesondere wenigstens ein Element der Ausschleuseeinrichtung sich innerhalb des Reinraums oder an der Reinraumgrenze befindet und/oder die Ausschleuseeinrichtung auch diesen Reinraum begrenzt.

Die vorliegende Erfindung ist weiterhin auf eine Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen drehbaren Transportträger aufweist, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umformbar sind und die Umformungsstationen jeweils Beaufschlagungseinrichtungen Kunststoffvorformlinge mit dem fließfähigen Medium zu beaufschlagen.

Weiterhin weist die Vorrichtung einen Reinraum auf, innerhalb dessen die Kunststoffvorformlinge zu den Kunststoffbehältnissen expandiert werden und/oder expandierbar sind. Weiterhin weist die Vorrichtung eine Zuführeinrichtung auf, um der Transporteinrichtung umzuformende Kunststoffvorformlinge zuzuführen, sowie eine Abführeinrichtung, um umgeformte Behältnisse von der Transporteinrichtung abzuführen.

Erfindungsgemäß weist die Vorrichtung eine Ausschleuseeinrichtung auf, um Kunststoffvorformlinge oder Kunststoffbehältnisse aus dem Transportpfad auszuschleusen, wobei diese Ausschleuseeinrichtung in einem Bereich der Abführeinrichtung und/oder zwischen der Abführeinrichtung und der Zuführeinrichtung und/oder in einem Bereich der Zuführeinrichtung angeordnet ist und/oder die Ausschleuseeinrichtung ist in einem Bereich angeordnet, in dem in einem Arbeitsbetrieb die Blasformeinrichtungen wenigstens teilweise und bevorzugt vollständig geöffnet sind.

Bevorzugt wird schließt daher der genannte Bereich zwischen der Abführeinrichtung und der Zuführeinrichtung auch die jeweiligen Übergabebereiche ein, also insbesondere denjenigen Bereich, in welchem in einem Arbeitsbetrieb (ordnungsgemäß) gefertigte Behältnisse von dem Transportträger und/oder den Umformungsstationen an die Abführeinrichtung übergeben werden und/oder insbesondere denjenigen Bereich, in welchem in einem Arbeitsbetrieb Kunststoffvorformlinge von der Zuführeinrichtung an den Transportträger und/oder die Umformungsstationen übergeben werden.

Bevorzugt ist die Vorrichtung derart ausgebildet, dass die Ausschleuseeinrichtung in einem Bereich angeordnet, in dem in einem Arbeitsbetrieb gefertigte Kunststoffbehältnisse von dem Transportträger und/oder den Umformungsstationen an die Abführeinrichtung übergeben werden.

Es wird darauf hingewiesen, dass die beiden hier beschriebenen Ausgestaltungen auch miteinander kombiniert werden können, d.h. die Ausschleuseeinrichtung sowohl in den Reinraum integriert ist als auch zwischen der Abführeinrichtung und der Zuführeinrichtung angeordnet ist.

Unter einer Anordnung zwischen der Abführeinrichtung der Zuführeinrichtung wird insbesondere verstanden, dass entlang des Transportpfads zwischen der Abführeinrichtung und der Zuführeinrichtung die Ausschleuseeinrichtung angeordnet ist. Insbesondere handelt es sich dabei in einem Arbeitsbetrieb um einen Bereich, in dem bereits (ordnungsgemäß) gefertigte Behältnisse abgeführt wurden oder werden, jedoch noch keine neuen Behältnisse bzw. Kunststoffvorformlinge in die Blasformeinrichtungen eingebracht werden.

Besonders bevorzugt handelt es sich hierbei hinsichtlich der Drehbewegung des Transportträgers um einen Winkelbereich, der größer ist als 5°, bevorzugt größer als 10°, bevorzugt größer als 20°. Bevorzugt handelt es sich hierbei um einen Winkelbereich, der kleiner ist als 100°, bevorzugt kleiner als 90°, bevorzugt kleiner als 80°, bevorzugt kleiner als 70° und bevorzugt kleiner als 60°.

Bevorzugt bildet die Ausschleuseeinrichtung eine Reinraumgrenze aus. Bevorzugt bildet die Ausschleuseeinrichtung auch eine Ausschleuseeinrichtung auf oder weist eine solche auf, mittels derer Kunststoffvorformlinge und/oder Kunststoffbehältnisse über eine Reinraumgrenze hinweg transportiert werden.

Durch die Anordnung der Ausschleuseeinrichtung in der Reinraumgrenze und/oder durch die Anordnung innerhalb des Reinraums kann erreicht werden, dass trotz einer Funktion dieser Ausschleuseeinrichtung auch ein steriler Arbeitsbetrieb der Vorrichtung nicht gestört wird. Bei einer bevorzugten Ausführungsform weist die Vorrichtung wenigstens einen beweglichen oder drehenden bzw. drehbaren Teil auf, insbesondere die oben genannte Transporteinrichtung bzw. den Transportträger und auch einen stehenden bzw. stationären Teil. Bevorzugt ist die Ausschleuseeinrichtung stationär und/oder in einem stationären Teil der Vorrichtung angeordnet.

Bevorzugt ist die Ausschleuseeinrichtung dazu geeignet und bestimmt, Behältnisse, insbesondere Kunststoffvorformlinge sowie geblasene Behältnisse in einem laufenden Betrieb auszusondern. Insbesondere ist die Ausschleuseeinrichtung dazu geeignet und bestimmt, fehlerhaften Kunststoffvorformlinge oder Kunststoffbehältnisse auszusondern.

Bei einer weiteren bevorzugten Ausführungsform weist der Reinraum eine torusförmige und/oder ringförmige Gestalt auf. Besonders bevorzugt ist wenigstens eine Wandung vorgesehen, welche den Reinraum begrenzt. Besonders bevorzugt sind wenigstens zwei Wandungen vorgesehen, wobei eine Wandung und insbesondere eine den Reinraum begrenzende Wandung gegenüber der anderen den Reinraum begrenzenden Wandung beweglich ist.

Bei einer weiteren vorteilhaften Ausführungsform weist die Vorrichtung eine Dichtungseinrichtung auf, um den Reinraum gegenüber einer unsterilen Umgebung abzudichten und bevorzugt weist diese Dichtungseinrichtung wenigstens einen mit einer Flüssigkeit befüllbaren umlaufenden Kanal auf. Bei dieser bevorzugten Ausgestaltung wird ein sogenanntes Wasserschloss vorgeschlagen, um den Reinraum gegenüber der unsterilen Umgebung abzudichten.

Besonders bevorzugt weist die Dichtungseinrichtung eine umlaufende Wandung auf, welche in diesen umlaufenden Kanal ragt, wobei die Wandung bevorzugt drehbar ausgebildet ist. Besonders bevorzugt ist die Drehbewegung dieser Wandung an die Drehbewegung des Transportträgers gekoppelt. Bevorzugt bildet diese umlaufende Wandung eine Reinraumgrenze des Reinraums aus.

Bei einer weiteren bevorzugten Ausführungsform weisen die Umformungsstationen jeweils Reckeinrichtungen zum Dehnen der Kunststoffvorformlinge in deren Längsrichtung auf und diese Reckeinrichtungen weisen bevorzugt jeweils eine in der Längsrichtung der Kunststoffvorformlinge bewegliche Reckstange auf, welche in die Kunststoffvorformlinge einführbar ist.

Bei einer weiteren vorteilhaften Ausführungsform ist die Ausschleuseeinrichtung dazu geeignet und bestimmt, Kunststoffvorformlinge oder Kunststoffbehältnisse aus dem Reinraum auszuschleusen. Dabei ist es bevorzugt möglich, dass die Behältnisse oder Kunststoffvorformlinge zunächst innerhalb des Reinraums aus dem Transportpfad entfernt werden und damit beispielsweise in einem bestimmten Bereich des Reinraums zum Liegen kommen und anschließend durch die Ausschleuseeinrichtung aus dem Reinraum und/oder über die Sterilraumgrenze hinweg ausgeschleust werden.

Bei einer weiteren bevorzugten Ausführungsform weist die Vorrichtung Filtereinrichtungen und insbesondere Luftfiltereinrichtungen auf, welche die zu den Kunststoffvorformlingen langende Luft filtern. Bevorzugt handelt es sich hierbei um sog. HEPA Filter.

Besonders bevorzugt weisen die Zuführ- und Abführvorrichtungen jeweils Transportsterne oder Transporträder auf, um Kunststoffvorformlinge zuzuführen oder Kunststoffbehältnisse abzuführen. Dabei ist es möglich, dass eine weitere Schleuseneinrichtung vorgesehen ist, über welche oder durch welche hindurch die Kunststoffvorformlinge dem Reinraum und/oder dem Transportträger zugeführt werden und/oder eine Schleuseneinrichtung vorgesehen ist, durch welche hindurch (ordnungsgemäße) Kunststoffbehältnisse aus dem Reinraum und/oder von dem Transportträger bzw. den einzelnen Umformungsstationen entfernt bzw. entnommen werden (im normalen Arbeitsbetrieb).

Bevorzugt transportiert jedoch auch die Zuführeinrichtung die Kunststoffvorformlinge bereits innerhalb eines Reinraums und/oder unter Reinraumbedingungen. Besonders bevorzugt werden die Behältnisse auch innerhalb eines Reinraums weiter transportiert und insbesondere befindet sich auch die Abführeinrichtung oder Teile hiervon innerhalb des oder eines Reinraums.

Besonders bevorzugt ermöglicht die Ausschleuseeinrichtung eine Ausschleusung während einer Produktion, insbesondere ohne dass die Vorrichtung nach dem Ausschleusen anschließend wieder erneut sterilisiert werden muss.

Besonders bevorzugt erlaubt die Vorrichtung wenigstens zwei voneinander unabhängige Betriebsarten bzw. kann in wenigstens zwei unabhängigen Betriebsarten betrieben werden nämlich einerseits einem Arbeitsbetrieb, in dem Kunststoffvorformlinge zu Kunststoffbehältnissen umgeformt werden und andererseits einem Sterilisationsbetrieb, in dem die Vorrichtung sterilisiert wird.

Besonders bevorzugt ist die Ausschleuseeinrichtung dazu geeignet und bestimmt sowohl Kunststoffvorformlinge als auch Kunststoffbehältnisse als auch Zwischenprodukte, welche sich bei dem Umformungsprozess ergeben, aus dem Reinraum auszuschleusen.

Besonders bevorzugt weist wie oben erwähnt die Vorrichtung eine Zuführeinrichtung auf, um der Transporteinrichtung umzuformende Kunststoffvorformlinge zuzuführen, sowie eine Abführeinrichtung, um umgeformte Behältnisse von der Transporteinrichtung abzuführen und bevorzugt ist die Ausschleuseeinrichtung zwischen der Abführeinrichtung und der Zuführeinrichtung angeordnet. Dabei ist es auch möglich, dass die Ausschleuseeinrichtung geometrisch zwischen der Abführeinrichtung und der Zuführeinrichtung angeordnet ist, bzw. Bestandteile der Ausschleuseeinrichtung geometrisch zwischen der Abführeinrichtung und der Zuführeinrichtung angeordnet sind.

Die Anordnung der Ausschleuseeinrichtung in diesem Winkelbereich bietet weiterhin den Vorteil, dass in diesem Bereich üblicherweise in einem Arbeitsbetrieb die Blasformen geöffnet sind, weil gerade gefertigte Behältnisse entnommen wurden und noch keine neuen Kunststoffvorformlinge eingeführt wurden. Dieser Bereich eignet sich daher besonders bevorzugt zu einem Entfernen von Kunststoffvorformlingen und/oder Kunststoffbehältnissen aus dem Transportpfad.

Bei einer weiteren vorteilhaften Ausführungsform ist die Ausschleuseeinrichtung unterhalb des Transportpfads der Kunststoffvorformlinge angeordnet. Auf diese Weise ist ein einfacher Ausschleusevorgang möglich, da die Wirkung der Schwerkraft ausgenutzt werden kann, um die Kunststoffvorformlinge oder Kunststoffbehältnisse zu der Ausschleuseeinrichtung zu transportieren. So können die Behältnisse herausfallen oder aus dem Transportpfad fallen, um zu der Ausschleuseeinrichtung zu gelangen.

Bevorzugt weist die Ausschleuseeinrichtung eine Öffnung auf, die in einem Winkelbereich von wenigstens 5°, bevorzugt wenigstens 10°, bevorzugt wenigstens 12° und bevorzugt wenigstens 15° und bevorzugt wenigstens 20° überstreicht. Besonders bevorzugt ist diese durch die Ausschleuseeinrichtung zur Verfügung gestellte Öffnung bzw. erreichbare Öffnung derart dimensioniert, dass sowohl Kunststoffvorformlinge als auch Kunststoffbehältnisse durch diese Öffnung hindurch fallen können.

Bevorzugt ist diese Ausschleuseeinrichtung derart ausgebildet, dass nach einem Ausschleusen von Kunststoffvorformlingen oder Kunststoffbehältnissen der Reinraum nicht wieder neu sterilisiert werden muss.

Bevorzugt weist die die Ausschleuseeinrichtung eine Verschließeinrichtung und insbesondere wenigstens eine Verschlussklappe auf, welche die genannte Öffnung in einem Arbeitsbetrieb der Anlage verschließt. Bevorzugt kann diese Verschlussklappe bezüglich des Reinraums nach außen und/oder nach unten hin geöffnet werden.

Bei einer bevorzugten Ausführungsform weist die Vorrichtung eine Absaugeinrichtung auf, um aus dem Reinraum ein fließfähiges Medium abzusaugen, wobei diese Absaugeinrichtung insbesondere in einem Bereich der Ausschleuseeinrichtung angeordnet ist. Besonders bevorzugt ist auch diese Absaugeinrichtung zwischen einem Auslauf bzw. zwischen der Abführeinrichtung angeordnet und andererseits dem Zulauf, d. h. der oben erwähnten Abführeinrichtung, über welche die Kunststoffvorformlinge zu der Vorrichtung geführt werden.

Besonders bevorzugt befindet sich die Absaugeinrichtung zwischen dem Reinraum und einer unten genauer beschriebenen Aufnahmevorrichtung, welche zur Aufnahme von ausgeschleusten Kunststoffvorformlingen oder Kunststoffbehältnissen dient. Besonders bevorzugt befindet sich in diesem Bereich auch eine Reinraumgrenze, da in einem Bereich oberhalb der Absaugung, d. h. dem Reinraum bevorzugt ein Überdruck herrscht. Durch die Absaugung wird bevorzugt verhindert, dass Keime oder Verunreinigungen in den Reinraum gelangen.

Bei einer bevorzugten Ausführungsform ist die Absaugeinrichtung unterhalb des Reinraums angeordnet (also näher am Erdmittelpunkt). Bevorzugt ist eine Reinraumgrenze oberhalb der Absaugeinrichtung angeordnet.

Besonders bevorzugt weist die Vorrichtung wie erwähnt einen Aufnahmeraum auf, der zum Aufnehmen ausgeschleuster Kunststoffvorformlinge oder Kunststoffbehältnisse oder Zwischenprodukte dient. Besonders bevorzugt ist dieser Aufnahmeraum außerhalb des Reinraums angeordnet. Besonders bevorzugt befindet sich dieser Aufnahmeraum unterhalb des Reinraums und insbesondere unterhalb der Ausschleuseeinrichtung.

Besonders bevorzugt stellt die Ausschleuseeinrichtung eine Verbindung zwischen dem Reinraum und dem Aufnahmeraum her. Besonders bevorzugt ist dieser Aufnahmeraum vollständig schließbar. Besonders bevorzugt weist jedoch dieser Aufnahmeraum auch eine Tür oder dergleichen auf, insbesondere um ausgeschleuste Behältnisse oder Kunststoffvorformlinge endgültig dem Reinraum entnehmen zu können.

Bei einer weiteren bevorzugten Ausführungsform ist der Aufnahmeraum über eine Schnittstelle mit dem Reinraum und/oder der Ausschleuseeinrichtung verbindbar.

Bevorzugt weist die oben beschriebene Absaugeinrichtung eine Pumpeneinrichtung auf, um aktiv eine Absaugung eines gasförmigen Mediums aus dem Reinraum zu ermöglichen. Besonders bevorzugt weist die Absaugeinrichtung wenigstens ein (wenigstens teilweise) im Inneren des Reinraum angeordnetes Rohr auf. Bevorzugt ist dieses Rohr vertikal ausgerichtet. Besonders bevorzugt sind wenigstens zwei derartige Rohre vorgesehen. Diese können dabei insbesondere seitlich neben der Ausschleuseeinrichtung angeordnet sein. Besonders bevorzugt enden diese Rohre und/oder beginnen diese Rohre innerhalb des Reinraums. Besonders bevorzugt ist die Absaugeinrichtung wenigstens teilweise unterhalb des Reinraums angeordnet. Besonders bevorzugt liegt damit eine Reinraumgrenze oberhalb dieser Absaugeinrichtung.

Besonders bevorzugt ist die Absaugeinrichtung derart ausgebildet, dass innerhalb des Reinraum seine Strömung des fließfähigen Mediums in Richtung der Ausschleuseeinrichtung bewirkt wird. Besonders bevorzugt entsteht auf diese Weise eine Strömung vertikal nach unten. Besonders bevorzugt ist in einem Arbeitsbetrieb der Reinraum mit einem Überdruck gegenüber der Umgebung beaufschlagt. Auf diese Weise kann erreicht werden, dass gasförmiges Medium nicht in den Reinraum gelangen kann.

Bevorzugt ist eine Absaugung aus einem unteren Teil der Vorrichtung insbesondere einem unterhalb der Schleuse liegenden Bereich nicht notwendig, da dieser Bereich nicht zu dem Sterilbereich zählt. Bevorzugt weist die Ausschleuseeinrichtung Schleusentüren auf, welche besonders bevorzugt jedoch nur geöffnet werden können, wenn weitere Verschließeinrichtungen wie unten genauer beschrieben, nach oben geklappt bzw. verschlossen sind.

Auf diese Weise bilden jedoch diese genannten weiteren Klappen keine Reinraumgrenze, sondern dienen nur dazu, bei einer geöffneten Tür des Aufnahmeraums einen Überdruck in dem Reinraum aufrechtzuerhalten. Eine Reinraumgrenze befindet sich in diesem Fall bevorzugt knapp oberhalb einer weiteren Verschließeinrichtung (wie unten genauer erläutert) da in diesem oberen Bereich relativ zu dem unteren Bereich, beispielsweise dem Aufnahmeraum zum Aufnehmen der ausgeschleusten Behältnisse ein Überdruck herrscht.

Auf diese Weise wird gewährleistet, dass keine Keime in den Reinraum gelangen. Wie oben erwähnt, kann zwischen einem Sterilisationsmodus und einem Produktionsmodus unterschieden werden. In einem Sterilisationsmodus, in dem keine Behältnisse hergestellt werden, wird das Innere des Reinraums sterilisiert. So kann beispielsweise H2O2 eingebracht werden. In dem Produktionsmodus, in dem Behältnisse hergestellt werden wird bevorzugt kein Wasserstoffperoxid oder ein anderes Sterilisationsmittel in den Reinraum eingebracht.

Bevorzugt erfolgt das Blasen der Behältnisse mit gefilterter Luft und insbesondere mit Hepagefilterter Luft. In dem Sterilisationsmodus kann die Schleusentüre nicht geöffnet werden, da sonst Wasserstoffperoxid nach außen gelangen würde. Die Türe kann nur im Produktionsmodus geöffnet werden, da während der Produktion kein Wasserstoffperoxid oder ein anderes Sterilisationsmittel aus dem Reinraum gelangen kann. Bevorzugt wird jedoch in diesem Fall darauf geachtet, dass es zu keiner Kontamination des Reinraums kommt. Dies wird bevorzugt dadurch erreicht, dass in dem oberen Bereich des Reinraums, bzw. allgemein in dem Reinraum ein Überdruck herrscht.

Besonders bevorzugt ist, wie oben erwähnt, der Aufnahmeraum zur Aufnahme von ausgeschleusten Kunststoffvorformlingen oder Kunststoffbehältnissen mit der Ausschleuseeinrichtung verbindbar. Zu diesem Zweck kann beispielsweise, wie oben erwähnt, eine weitere Verschließeinrichtung wie eine Tür oder dergleichen vorgesehen sein.

In einem Normalbetrieb der Vorrichtung ist der besagte Aufnahmeraum bevorzugt von dem Reinraum abgetrennt. Die besagte Tür kann zeitweise geöffnet werden, um bereits aus dem Reinraum und/oder dem Transportpfad ausgeschleuste Kunststoffvorformlinge oder Behältnisse in den Aufnahmeraum zu fördern. Es ist dabei möglich, dass ausgeschleuste Kunsttoffvorformlinge oder Kunststoffbehältnisse nach ihrem Ausschleusen aus dem Transportpfad eine gewisse Zeit in dem Reinraum liegen bleiben, etwa in dem Bereich der Schleuseneinrichtung um dann aus dem Reinraum und bevorzugt in den Aufnahmeraum ausgeschleust zu werden.

Bei einer bevorzugten Ausführungsform weist die Vorrichtung eine Zustandserfassungseinrichtung auf, welche dazu geeignet und bestimmt ist, einen fehlerhaften Umformungsvorgang und/oder ein fehlerhaft umgeformtes Behältnis zu erfassen. Ein derartiges Behältnis kann anschließend ausgesondert werden. Besonders bevorzugt kann jeder Umformungsstation eine derartige Zustandserfassungseinrichtung zugeordnet sein.

So kann beispielsweise während des Expansionsvorgangs festgestellt werden, dass es zu einem Druckabfall oder dergleichen kommt, der auf ein geplatztes Behältnis hindeutet. Daneben wäre auch eine optische Inspektion der Behältnisse oder Kunststoffvorformlinge möglich, durch welche dann ein Ausschleusevorgang eingeleitet werden kann.

So kann beispielsweise festgestellt werden, dass ein bestimmter Kunststoffvorformling bereits zu Beginn des Blasvorgangs fehlerhaft ist. In diesem Fall kann beispielsweise auf eine Umformung dieses Kunststoffvorformlings verzichtet werden und dieser lediglich transportiert werden. Anschließend kann der Kunststoffvorformling ausgeschleust werden.

Besonders bevorzugt weist die Vorrichtung auch eine Zuordnungseinrichtung auf, welche einem bestimmten Kunststoffvorformling oder Kunststoffbehältnis eine bestimmte Umformungsstation, welche gegebenenfalls einen Fehler verursacht, zuordnet. Auf diese Weise kann festgestellt werden, dass eine bestimmte Umformungsstation fehlerhafte Kunststoffbehältnisse produziert und diese Umformungsstation kann gegebenenfalls für einen bestimmten Zeitraum abgeschaltet werden.

Bei einer weiteren vorteilhaften Ausführungsform weist die Vorrichtung eine Steuerungseinrichtung auf, welche wenigstens abschnittsweise einen Transport der Kunststoffvorformlinge oder Kunststoffbehältnisse mit der Transporteinrichtung zwischen der Abführeinrichtung und der Zuführeinrichtung und/oder in einem geöffneten Zustand der Blasformeinrichtung ermöglicht.

Wie oben erwähnt werden in einem normalen Arbeitsbetrieb zwischen der Abführeinrichtung und der Zuführeinrichtung keine Behältnisse transportiert, da in diesem Bereich bereits gefertigte Behältnisse abgegeben wurden und noch keine neuen Kunststoffvorformlinge zugeführt wurden. Dies bedeutet, dass sich in diesem Bereich üblicherweise keine intakten Behältnisse befinden würden. Eine Steuerungseinrichtung kann bei Erkennen eines Fehlers jedoch bewirken, dass das entsprechende nicht intakte oder fehlerhafte Behältnis in diesen Bereich transportiert wird, um dieses auszuschleusen.

Besonders bevorzugt weist die Transporteinrichtung Halteeinrichtungen und insbesondere gesteuerte Halteeinrichtungen zum Halten der Kunststoffvorformlinge oder Behältnisse auf. Eine Steuereinrichtung kann dann bewirken, dass die Halteeinrichtungen die Behältnisse in dem besagten Bereich zwischen der Abführeinrichtung und der Zuführeinrichtung auswerfen.

Besonders bevorzugt weist die Vorrichtung eine Führungseinrichtung auf, um die Blasformeinrichtungen zu öffnen und zu schließen. Besonders bevorzugt werden die Kunststoffvorformlinge oder Behältnisse bei einer geöffneten Blasformeinrichtung fallengelassen. Daneben ist jedoch auch eine Ausschleusung direkt an der Zuführeinrichtung oder der Abführeinrichtung denkbar, beispielsweise mittels eines sogenannten Pushers.

Bei einer bevorzugten Ausführungsform ist die Ausschleuseeinrichtung wie oben erwähnt in den Reinraum integriert und/oder die Ausschleuseeinrichtung ist in wenigstens eine den Reinraum begrenzende Wandung integriert.

Bei einer weiteren vorteilhaften Ausführungsform ermöglicht die Ausschleuseeinrichtung eine Ausschleusung von Behältnissen aus dem Transportpfad (aber noch nicht notwendigerweise aus der Reinraum) während der laufenden Produktion.

Die vorliegende Erfindung ist weiterhin auf ein Verfahren zum Umformen von Kunststoffvorformlingen zu Kunststoffbehältnissen gerichtet, wobei eine Transporteinrichtung die umzuformenden Kunststoffvorformlinge (insbesondere in einem Arbeitsbetrieb) entlang eines vorgegebenen Transportpfads transportiert, und wobei die Transporteinrichtung einen drehbaren Transportträger aufweist, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umgeformt werden und die Umformungsstationen jeweils Beaufschlagungseinrichtungen aufweisen, welche die Kunststoffvorformlinge mit einem fließfähigen und insbesondere gasförmigen Medium beaufschlagen, wobei die Vorrichtung weiterhin einen Reinraum aufweist, innerhalb dessen die Kunststoffvorformlinge zu den Kunststoffbehältnissen expandiert werden.

Erfindungsgemäß werden wenigstens zeitweise Kunststoffvorformlinge oder Kunststoffbehältnisse mittels einer Ausschleuseeinrichtung aus der Vorrichtung und insbesondere aus dem Reinraum ausgeschleust, wobei die Ausschleuseeinrichtung in den Reinraum integriert ist und/oder die Ausschleuseeinrichtung in wenigstens eine den Reinraum begrenzende Wandung integriert ist oder wird.

Bei einem weiteren erfindungsgemäßen Verfahren zum Umformen von Kunststoffvorformlingen zu Kunststoffbehältnissen transportiert eine Transporteinrichtung die umzuformende Kunststoffvorformlinge entlang eines vorgegebenen Transportpfads, wobei die Transporteinrichtung einen drehbaren Transportträger aufweist, an dem eine Vielzahl von Umformungsstationen angeordnet ist und wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umgeformt werden und die Umformungsstationen jeweils Beaufschlagungseinrichtungen aufweisen, welche die Kunststoffvorformlinge mit dem fließfähigen Medium beaufschlagen, wobei die Vorrichtung einen Reinraum aufweist, innerhalb dessen die Kunststoffvorformlinge zu den Kunststoffbehältnissen expandiert werden, wobei der Transporteinrichtung die Kunststoffvorformlinge mittels einer Zuführeinrichtung zugeführt werden und die umgeformten Kunststoffvorbehältnisse mittels einer Abführeinrichtung von der Transporteinrichtung abgeführt werden.

Erfindungsgemäß werden wenigstens zeitweise Kunststoffvorformlinge oder Kunststoffbehältnisse mittels einer Ausschleuseeinrichtung aus der Vorrichtung und insbesondere aus dem Reinraum ausgeschleust, wobei das Ausschleusen in einer Transportrichtung der Kunststoffvorformlinge in einem Bereich der Abführeinrichtung und/oder zwischen der Abführeinrichtung und der Zuführeinrichtung erfolgt.

Unter einem Ausschleusen zwischen der Abführeinrichtung und der Zuführeinrichtung wird auch ein Ausschleusen unmittelbar an der Abführeinrichtung oder unmittelbar an der Zuführeinrichtung verstanden, also etwa in denjenigen Abschnitten, in denen die Behältnisse von der Umformungsstation an die Abführeinrichtung übergeben werden oder in denen Kunststoffvorformlinge von der Zuführeinrichtung an die Umformungsstationen übergeben werden.

Bevorzugt erfolgt eine Ausschleusung in einem Bereich, in dem in einem Arbeitsbetrieb die Blasformeinrichtung geöffnet sind oder geöffnet werden.

Besonders bevorzugt werden die Kunststoffvorformlinge in einem laufenden Transportpfad ausgeschleust.

Bei einem weiteren bevorzugten Verfahren werden Kunststoffvorformlinge oder Kunststoffbehältnisse aus dem Reinraum ausgeschleust.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Detaildarstellung einer erfindungsgemäßen Vorrichtung;
- Fig. 3: eine Darstellung zur Absaugung aus dem Reinraum;
- Fig. 4: eine weitere Darstellung zur Absaugung aus dem Reinraum.

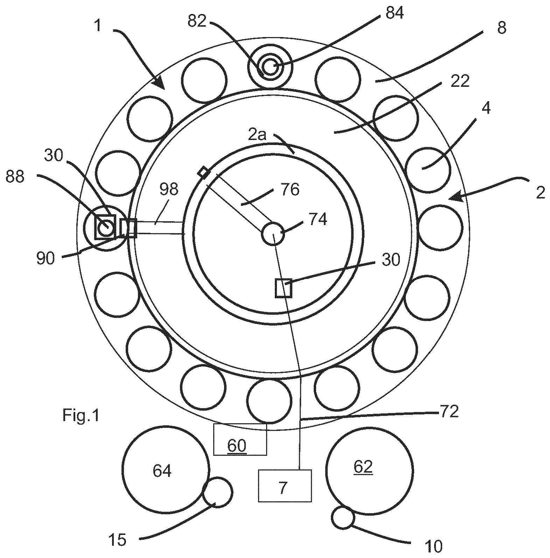

Fig. 1 zeigt eine Vorrichtung 1 zum Umformen von Kunststoffvorformlingen 10 zu Kunststoffbehältnissen 15. Diese Vorrichtung weist einen drehbaren Träger 22 auf, an dem eine Vielzahl von Umformungsstationen 4 angeordnet ist. Diese einzelnen Umformungsstationen weisen jeweils Blasformen bzw. Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Bevorzugt liegt die Anzahl dieser Umformungsstationen zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert. Damit handelt es sich bei der Transporteinrichtung 62 um die oben erwähnte Zuführeinrichtung und bei der Transporteinrichtung 64 um die oben erwähnte Abführeinrichtung.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das Reservoir 2a angegeben, bei dem es sich hier bevorzugt um einen Ringkanal handelt.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 98 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden.

Das Bezugszeichen 8 kennzeichnet schematisch einen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Das Bezugszeichen 60 kennzeichnet grob schematisch eine Ausscheuseeinrichtung. Diese ist, wie oben erwähnt, zwischen der Abführeinrichtung 64 und der Zuführeinrichtung 62 angeordnet.

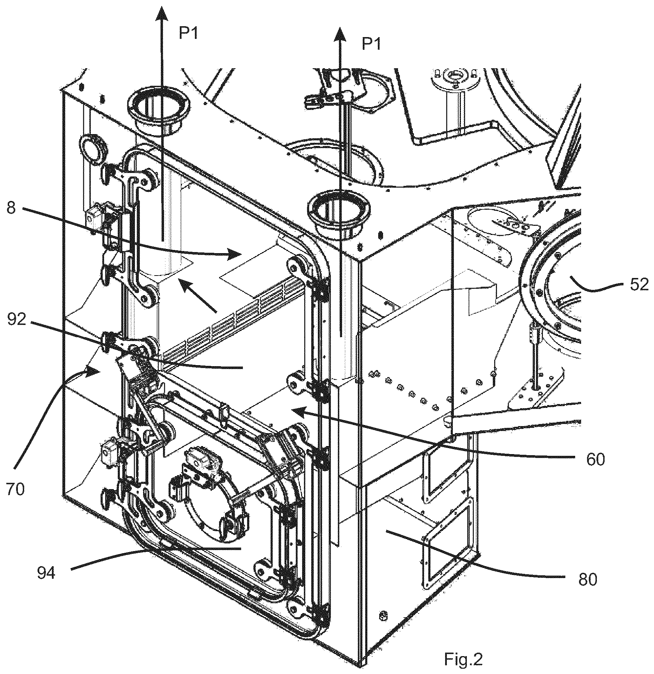

Fig. 2 zeigt eine teilweise Darstellung einer erfindungsgemäßen Vorrichtung. Dabei ist der Reinraum 8 erkennbar, innerhalb dessen die Kunststoffvorformlinge zu den Kunststoffbehältnissen umgeformt werden. Das Bezugszeichen 60 kennzeichnet in ihrer Gesamtheit eine Ausschleuseeinrichtung, die dazu dient, (nicht gezeigte) Behältnisse aus dem Reinraum auszuschleusen.

Diese Ausschleuseeinrichtung weist hier eine Klappenanordnung 92 auf, die hier in einem geöffneten Zustand dargestellt ist, d. h. in einem Zustand, in dem Kunststoffvorformlinge oder Kunststoffbehältnisse aus dem Reinraum in einen Aufnahmeraum 80 führbar sind (unter Wirkung der Schwerkraft).

In einem geschlossenen Zustand der Klappe 92 ist der Reinraum 8 gegenüber dem Aufnahmeraum 80 abgegrenzt.

Das Bezugszeichen 94 kennzeichnet eine Verschließeinrichtung und insbesondere eine Tür, mittels derer der Aufnahmeraum 80 geöffnet werden kann, um beispielsweise darin befindliche ausgeschleuste Kunststoffvorformlinge oder Kunststoffbehältnisse endgültig zu entnehmen.

Besonders bevorzugt ist ein Sperrmechanismus vorgesehen, der ein Öffnen der Tür 94 verhindert, wenn die Klappe der Ausschleuseeinrichtung 92, in dem in Fig. 2 gezeichneten Zustand ist, d. h. in einem geöffneten Zustand. Auf diese Weise kann verhindert werden, dass, solange eine Strömungsverbindung zwischen dem Reinraum 8 und dem Aufnahmeraum 80 besteht die Tür 94 geöffnet werden kann, wodurch der Reinraum verunreinigt werden könnte.

Generell wird unter einem Reinraum ein Raum verstanden, innerhalb dessen ein höherer Reinheitsgrad besteht als in einer sterilen Umgebung. Insbesondere sind in einem Reinraum erheblich weniger Keime oder Verunreinigungen vorhanden als außerhalb des Reinraums. Das Bezugszeichen 52 kennzeichnet eine weitere Schleuseneinrichtung, über welche hier Kunststoffvorformlinge dem Reinraum zuführbar sind.

Das Bezugszeichen 70 kennzeichnet eine Absaugeeinrichtung, welche zum Absaugen eines gasförmigen Mediums dient. Dabei erfolgt diese Absaugung durch zwei Rohre, wie durch die Pfeile P1 veranschaulicht.

Eine Absaugung aus dem unteren Teil (unterhalb der Klappen 92) ist nicht notwendig, da dieser Bereich nicht zum Sterilbereich bzw. Reinraum zählt. Wie bereits dargestellt, kann die Schleusentüre 94 nur geöffnet werden, sobald die Klappen 92 nach oben geklappt sind. Die Klappen 92 bilden aber keine mechanische Reinraumgrenze, sondern dienen bevorzugt nur dazu, dass bei geöffneter Türe 94 ein Überdruck im Reinraum erhalten bleibt. Die Reinraumgrenze befindet sich knapp oberhalb der Klappe 92, da im oberen Bereich relativ zum unteren Bereich ein Überdruck herrscht. Somit wird gewährleistet, dass keine Keime in den Reinraum 8 gelangen.

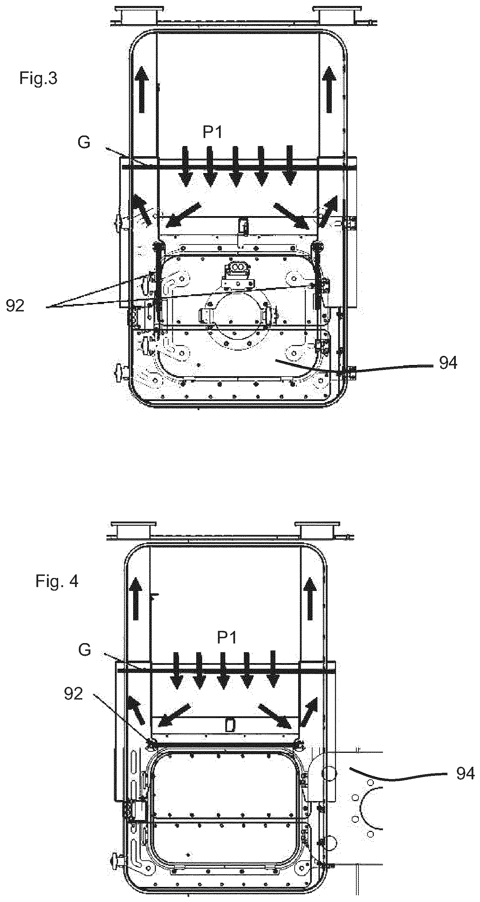

Die Fig. 3 und 4 veranschaulichen die Funktion dieser Absaugung.

Bei der in Fig. 3 gezeigten Situation sind die Klappen 92 geöffnet. Die Absaugung erfolgt hier entlang der Pfeile P1. Das Bezugszeichen G kennzeichnet damit eine Reinraumgrenze, die jedoch oberhalb der Klappen 92 verläuft.

Fig. 4 zeigt eine Situation, bei der die Klappen 92 geschlossen sind. Auch hier verläuft die Reinraumgrenze oberhalb der geschlossenen Kappen 92. In dieser Situation kann auch die Türe 94 geöffnet werden, insbesondere um Behältnisse aus dem Aufnahmeraum zu entfernen.

## Patentansprüche

1. Vorrichtung (1) zum Umformen von Kunststoffvorformlingen (10) zu Kunststoffbehältnissen (15) mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen, und wobei die Vorrichtung einen Reinraum (8) aufweist, innerhalb dessen die Kunststoffvorformlinge (10) zu den Kunststoffbehältnissen expandiert werden und wobei die Vorrichtung (1) eine Zuführeinrichtung (62) aufweist, um der Transporteinrichtung (2) umzuformende Kunststoffvorformlinge (10) zuzuführen sowie eine Abführeinrichtung (64), um umgeformte Behältnisse (15) von der Transporteinrichtung (2) abzuführen,
**dadurch gekennzeichnet, dass**
die Vorrichtung (1) eine Ausschleuseeinrichtung (60) aufweist, um Kunststoffvorformlinge oder Kunststoffbehältnisse aus dem Transportpfad auszuschleusen, wobei diese Ausschleuseeinrichtung (60) in einem Bereich der Abführeinrichtung und/oder zwischen der Abführeinrichtung (64) und der Zuführeinrichtung (62) angeordnet ist, wobei die Ausschleuseeinrichtung Schleusentüren aufweist, welche nur geöffnet werden können, wenn weitere Verschließeinrichtungen verschlossen sind.

2. Vorrichtung (1) nach Anspruch 1,
**dadurch gekennzeichnet, dass**
die Vorrichtung (1) eine Dichtungsvorrichtung aufweist, um den Reinraum (8) gegenüber einer unsterilen Umgebung abzudichten und diese Dichtungseinrichtung bevorzugt wenigstens einen mit einer Flüssigkeit befüllbaren umlaufenden Kanal aufweist.

3. Vorrichtung (1) nach Anspruch 1,
**dadurch gekennzeichnet, dass**
die Ausschleuseeinrichtung (60) dazu geeignet und bestimmt ist, Kunststoffvorformlinge (10) oder Kunststoffbehältnisse (15) aus dem Reinraum auszuschleusen.

4. Vorrichtung (1) nach dem vorangegangenen Anspruch,
**dadurch gekennzeichnet, dass**
die Vorrichtung (1) eine Steuerungseinrichtung aufweist, welche wenigstens abschnittsweise einen Transport der Kunststoffvorformlinge oder Kunststoffbehältnisse mit der Transporteinrichtung (2) zwischen der Abführeinrichtung und der Zuführeinrichtung und/oder in einem geöffneten Zustand der Blasformeinrichtung ermöglicht.

5. Vorrichtung (1) nach dem vorangegangenen Anspruch,
**dadurch gekennzeichnet, dass**
die Schleuseneinrichtung (60) in den Reinraum integriert ist und/oder dass die Schleuseneinrichtung (60) in wenigstens eine den Reinraum begrenzende Wandung integriert ist.

6. Vorrichtung (1) nach wenigstens einem der vorangegangenen Ansprüche,
**dadurch gekennzeichnet, dass**
die Schleuseneinrichtung (60) unterhalb des Transportpfads der Kunststoffvorformlinge oder Kunststoffbehältnisse (15) angeordnet ist.

7. Vorrichtung (1) nach wenigstens einem der vorangegangenen Ansprüche,
**dadurch gekennzeichnet, dass**
die Vorrichtung (1) eine Absaugeinrichtung (70) aufweist, um aus dem Reinraum ein fließfähiges Medium abzusaugen, wobei diese Absaugeinrichtung (70) insbesondere in einem Bereich der Schleuseneinrichtung angeordnet ist.

8. Vorrichtung (1) nach dem vorangegangenen Anspruch,
**dadurch gekennzeichnet, dass**
die Absaugeinrichtung wenigstens ein im Inneren des Reinraums angeordnetes Rohr aufweist.

9. Vorrichtung (1) nach wenigstens einem der vorangegangenen Ansprüche 6 - 7,
**dadurch gekennzeichnet, dass**
die Absaugeinrichtung derart ausgebildet ist, dass innerhalb des Reinraums eine Strömung des fließfähigen Mediums in Richtung der Schleuseneinrichtung bewirkt wird.

10. Vorrichtung (1) nach wenigstens einem der vorangegangenen Ansprüche,
**dadurch gekennzeichnet, dass**
die Vorrichtung (1) einen Aufnahmeraum (80) zur Aufnahme ausgeschleuster Kunststoffvorformlinge oder Kunststoffbehältnisse aufweist.

11. Vorrichtung (1) nach dem vorangegangenen Anspruch,
**dadurch gekennzeichnet, dass**
der Aufnahmeraum mittels einer Schnittstelle mit der Schleuseneinrichtung verbindbar ist.

12. Vorrichtung nach wenigstens einem der vorangegangenen Ansprüche,
**dadurch gekennzeichnet, dass**
die Vorrichtung eine Zustandserfassungseinrichtung aufweist, welche dazu geeignet ist, einen fehlerhaften Umformungsvorgang und/oder ein fehlerhaft umgeformtes Behältnis zu erfassen.

13. Verfahren zum Umformen von Kunststoffvorformlingen (10) zu Kunststoffbehältnissen (15), wobei eine Transporteinrichtung (2) die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen aufweisen, innerhalb derer die Kunststoffvorformlinge (10) durch Beaufschlagung mit einem fließfähigen Medium zu den Kunststoffbehältnissen (15) umgeformt werden und die Umformungsstationen (4) jeweils Beaufschlagungseinrichtungen (84) aufweisen, welche die Kunststoffvorformlinge (10) mit dem fließfähigen Medium beaufschlagen, und wobei die Vorrichtung einen Reinraum (8) aufweist, innerhalb dessen die Kunststoffvorformlinge (10) zu den Kunststoffbehältnissen expandiert werden, wobei der Transporteinrichtung die Kunststoffvorformlinge mittels einer Zuführeinrichtung zugeführt werden und die umgeformten Kunststoffbehältnisse mittels einer Abführeinrichtung von der Transporteinrichtung (2) abgeführt werden,
**dadurch gekennzeichnet, dass**
wenigstens zeitweise Kunststoffvorformlinge oder Kunststoffbehältnisse mittels einer Schleuseneinrichtung aus der Vorrichtung (1) und insbesondere aus dem Reinraum (8) ausgeschleust werden, wobei das Ausschleusen in einer Transportrichtung der Kunststoffvorformlinge in einem Bereich der Abführeinrichtung und/oder zwischen der Abführeinrichtung und der Zuführeinrichtung erfolgt, wobei die Ausschleuseeinrichtung Schleusentüren aufweist, welche nur geöffnet werden können, wenn weitere Verschließeinrichtungen verschlossen sind.

## Claims

1. An apparatus (1) for forming plastic preforms (10) into plastic containers (15) with a transport device (2) which transports the plastic preforms to be formed along a predetermined transport path, wherein the transport device (2) having a rotatable transport carrier (22) on which a plurality of forming stations (4) is arranged, wherein said forming stations (4) each having blow molding devices within which the plastic preforms (10) are able to be formed by application of a flowable medium into the plastic containers (15), and the forming stations (4) each having application devices (84) in order to apply the flowable medium to the plastic preforms (10), and wherein the apparatus having a clean room (8), within which the plastic preforms (10) are expanded into the plastic containers, and wherein the apparatus having a supply device (62) to supply the plastic preforms (10) to the transport device (2) and a discharge device (64) to discharge formed containers from the transport device (2),
**characterized in that**
the apparatus (1) has an ejection device (60) for ejecting plastic preforms or plastic containers from the transport path, wherein said ejection device (60) being arranged in a region of the discharge device and/or between the discharge device (64) and the supply device (62), wherein the ejection device has ejection sluice doors which can only be opened when further sealing devices are sealed.

2. The apparatus (1) according to claim 1,
**characterized in that**
the apparatus (1) has a sealing device in order to seal the clean room (8) off from an unsterile environment, and this sealing device has at least one circumferential channel that can be filled with a liquid.

3. The apparatus (1) according to claim 1,
**characterized in that**
the ejection device (60) is suitable and intended for discharging plastic preforms (10) or plastic containers (15) from the clean room.

4. The apparatus (1) according to the preceding claim,
**characterized in that**
the apparatus (1) has a control device which enables, at least in sections, a transport of the plastic preforms or plastic containers with the transport device (2) between the discharge device and the supply device and/or in an open state of the blow molding device.

5. The apparatus (1) according to the preceding claim,
**characterized in that**
the ejection device (60) is integrated into the clean room and/or **in that** the ejection device (60) is integrated into at least one wall delimiting the clean room.

6. The apparatus (1) according to at least one of the preceding claims,
**characterized in that**
the ejection device (60) is arranged below the transport path of the plastic preforms or plastic containers (15).

7. The apparatus (1) according to at least one of the preceding claims,
**characterized in that**
the apparatus (1) has a suction device (70) for suctioning off a flowable medium from the clean room, wherein said suction device (70) being arranged in particular in a region of the ejection device.

8. The apparatus (1) according to the preceding claim,
**characterized in that**
the suction device has at least one tube arranged in the interior of the clean room.

9. The apparatus (1) according to at least one of the preceding claims 6-7, **characterized in that**
the suction device is designed in such a way as to cause a flow of the flowable medium in the direction of the ejection device within the clean room.

10. The apparatus (1) according to at least one of the preceding claims, **characterized in that**
the apparatus (1) has a receiving space (80) for receiving ejected plastic preforms or plastic containers.

11. The apparatus (1) according to the preceding claim,
**characterized in that**
the receiving space can be connected to the ejection device by an interface.

12. The apparatus (1) according to at least one of the preceding claims, **characterized in that**
the apparatus has a state detection device which is suitable for detecting a faulty forming process and/or an incorrectly formed container.

13. A method for forming plastic preforms (10) into plastic containers (15), wherein a transport device (2) transporting the plastic preforms to be formed along a predetermined transport path, wherein the transport device (2) has a rotatable transport carrier (22) on which a plurality of forming stations (4) is arranged, wherein said forming stations (4) each having blow molding devices within which the plastic preforms (10) are formed by application thereto of a flowable medium into the plastic containers (15), and the forming stations (4) each having application devices (84) which apply the flowable medium to the plastic preforms (10), and wherein the apparatus having a clean room (8), within which the plastic preforms (10) are expanded into the plastic containers (15), wherein the plastic preforms being supplied to the transport device by a supply device, and the formed plastic containers being discharged from the transport device (2) by a discharge device,
**characterized in that**
plastic preforms or plastic containers are ejected at least at times from the apparatus (1) by an ejection device and in particular from the clean room (8), wherein the ejection taking place in a transport direction of the plastic preforms in a region of the discharge device and/or between the discharge device and the supply device, wherein the ejection device has ejection sluice doors which can only be opened when further sealing devices are sealed.

## Revendications

1. Dispositif (1) de mise en forme de préformes en matière plastique (10) en récipients en matière plastique (15) avec un système de transport (2), qui transporte les préformes en matière plastique à mettre en forme le long d'un trajet de transport prédéfini, dans lequel le dispositif de transport (2) présente un support de transport rotatif (22) sur lequel sont disposées une pluralité de stations de mise en forme (4), dans lequel lesdites stations de mise en forme (4) présentent respectivement des systèmes de moulage par soufflage, à l'intérieur desquels les préformes en matière plastique (10) peuvent être mises en forme en les récipients en matière plastique (15) par application d'un milieu fluide et les stations de mise en forme (4) présentent respectivement des systèmes d'application (84) pour appliquer le milieu fluide sur les préformes en matière plastique (10), et dans lequel le dispositif présente une salle blanche (8), à l'intérieur de laquelle les préformes en matière plastique (10) sont dilatées en les récipients en matière plastique et dans lequel le dispositif (1) présente un système d'amenée (62), pour amener au système de transport (2) des préformes en matière plastique (10) à mettre en forme ainsi qu'un système d'évacuation (64) pour évacuer des récipients (15) mis en forme du système de transport (2),
**caractérisé en ce que**
le dispositif (1) présente un système d'évacuation (60) pour évacuer des préformes en matière plastique ou des récipients en matière plastique du trajet de transport, dans lequel ledit système d'évacuation (60) est disposé dans une zone du système de sortie et/ou entre le système de sortie (64) et le système d'amenée (62), dans lequel le système d'évacuation présente des portes de sas, qui ne peuvent être ouvertes que si d'autres systèmes de fermeture sont fermés.

2. Dispositif (1) selon la revendication 1,
**caractérisé en ce que**
le dispositif (1) présente un système d'étanchéité pour étanchéifier la salle blanche (8) par rapport à un environnement non stérile et ledit système d'étanchéité présente de manière préférée au moins un canal périphérique pouvant être rempli d'un liquide.

3. Dispositif (1) selon la revendication 1,
**caractérisé en ce que**
le système d'évacuation (60) est adapté pour et se destine à évacuer des préformes en matière plastique (10) ou des récipients en matière plastique (15) hors de la salle blanche.

4. Dispositif (1) selon la revendication précédente,
**caractérisé en ce que**
le dispositif (1) présente un système de commande, qui permet au moins en partie un transport des préformes en matière plastique ou des récipients en matière plastique avec le système de transport (2) entre le système de sortie et le système d'amenée et/ou dans un état ouvert du système de moulage par soufflage.

5. Dispositif (1) selon la revendication précédente,
**caractérisé en ce que**
le système de sas (60) est intégré dans la salle blanche et/ou que le système de sas (60) est intégré dans au moins une paroi délimitant la salle blanche.

6. Dispositif (1) selon au moins l'une quelconque des revendications précédentes,
**caractérisé en ce que**
le système de sas (60) est disposé sous le trajet de transport des préformes en matière plastique ou des récipients en matière plastique (15).

7. Dispositif (1) selon au moins l'une quelconque des revendications précédentes,
**caractérisé en ce que**
le dispositif (1) présente un système d'évacuation par aspiration (70) pour évacuer par aspiration un milieu fluide hors de la salle blanche, dans lequel ledit système d'évacuation par aspiration (70) est disposé en particulier dans une zone du système de sas.

8. Dispositif (1) selon la revendication précédente,
**caractérisé en ce que**
le système d'évacuation par aspiration présente au moins un tuyau disposé à l'intérieur de la salle blanche.

9. Dispositif (1) selon au moins l'une quelconque des revendications 6 et 7 précédentes,
**caractérisé en ce que**
le système d'évacuation par aspiration est réalisé de telle manière qu'un écoulement du milieu fluide est provoqué à l'intérieur de la salle blanche en direction du système de sas.

10. Dispositif (1) selon au moins l'une quelconque des revendications précédentes,
**caractérisé en ce que**
le dispositif (1) présente un espace de réception (80) pour recevoir des préformes en matière plastique ou des récipients en matière plastique évacués.

11. Dispositif (1) selon la revendication précédente,
**caractérisé en ce que**
la chambre de réception peut être reliée au système de sas au moyen d'une interface.

12. Dispositif selon au moins l'une quelconque des revendications précédentes,
**caractérisé en ce que**
le dispositif présente un système de détection d'état qui se destine à détecter une opération de mise en forme défectueuse et/ou un récipient mal mis en forme.

13. Procédé de mise en forme de préformes en matière plastique (10) en des récipients en matière plastique (15), dans lequel un système de transport (2) transporte les préformes en matière plastique à mettre en forme le long d'un trajet de transport prédéfini, dans lequel le système de transport (2) présente un support de transport rotatif (22), sur lequel sont disposées une pluralité de stations de mise en forme (4), dans lequel lesdites stations de mise en forme (4) présentent respectivement des systèmes de moulage par soufflage, à l'intérieur desquels les préformes en matière plastique (10) sont mises en forme en les récipients en matière plastique (15) par application d'un milieu fluide et les stations de mise en forme (4) présentent respectivement des systèmes d'application (84), lesquels appliquent le milieu fluide sur les préformes en matière plastique (10), et dans lequel le dispositif présente une salle blanche (8) à l'intérieur de laquelle les préformes en matière plastique (10) sont dilatées en les récipients en matière plastique, dans lequel les préformes en matière plastique sont amenées au moyen d'un système d'amenée au système de transport et les récipients en matière plastique mis en forme sont évacués du système de transport (2) au moyen d'un système de sortie,
**caractérisé en ce que**
des préformes en matière plastique ou des récipients en matière plastique sont évacués au moins temporairement du dispositif (1) et en particulier de la salle blanche (8) au moyen d'un système de sas, dans lequel l'évacuation est effectuée dans un sens de transport des préformes en matière plastique dans une zone du système de sortie et/ou entre le système de sortie et le système d'amenée, dans lequel le système d'évacuation présente des portes de sas qui ne peuvent être ouvertes que si d'autres systèmes de fermeture sont fermés.
